Europäisches Patentamt

European Patent Office

Office européen des brevets

(19)

(11) Veröffentlichungsnummer: **0 264 052**
**A2**

# (12) EUROPÄISCHE PATENTANMELDUNG

(21) Anmeldenummer: 87114560.3

(22) Anmeldetag: 06.10.87

(51) Int. Cl.⁴ **B29C 65/20** , B29C 65/02 , E06B 3/00

(30) Priorität: 11.10.86 DE 3634793

(43) Veröffentlichungstag der Anmeldung:
20.04.88 Patentblatt 88/16

(84) Benannte Vertragsstaaten:
AT BE CH DE ES FR GB GR IT LI LU NL SE

(71) Anmelder: Urban GmbH & Co. Maschinenbau KG
Dornierstrasse 5
D-8940 Memmingen(DE)

(72) Erfinder: Tesch, Wolfgang
Keltenstrasse 18
D-8941 Heimertingen(DE)
Erfinder: Küchle, Ernst
Haslach-Jägerberg 15
D-7956 Rot a.d. Rot(DE)
Erfinder: Baumer, Albert
Bodenseestrasse 31
D-8940 Memmingen(DE)

(74) Vertreter: Pfister, Helmut, Dipl.-Ing.
Buxacher Strasse 9
D-8940 Memmingen/Bayern(DE)

(54) Verfahren zum Verschweissen von Kunststoffprofilen.

(57) Vor dem Verschweißen werden die Enden der beiden Kunststoffprofile derart profiliert, daß jeweils zwei Bereiche entstehen. Der Bereich (1) besitzt eine vordere Endfläche (10), die vom Schweißspiegel erwärmt wird, während der sich daran anschließende seitliche Bereich (2) eine abgeschrägte Endfläche (23) aufweist. Beim Verschweißen entsteht auf diese Weise nur an der Seite des Bereiches (1) eine Schweißraupe, während an der Seite des Bereiches (2) eine Schweißraupenbildung unterbleibt.

Fig.2

## "Verfahren zum Verschweißen von Kunststoffprofilen"

Die Erfindung betrifft ein Verfahren zum Verschweißen von Kunststoffprofilen insbesondere für Fenster oder Türrahmen, wobei die Kunststoffprofile an ihren zu verschweißenden Enden vor dem Schweißvorgang profiliert werden, um mindestens teilweise je zwei parallele Bereiche zu bilden, von denen der erste Bereich gegenüber dem zweiten Bereich vorsteht, die an einem Schweißspiegel erwärmt und zum Verschweißen diese ersten Bereiche der beiden Kunststoffprofile gegeneinander geführt und gepreßt werden, wobei auf der einen Seite dieser ersten Bereiche vom verdrängten Material ein Schweißwulst gebildet wird, und die zweiten Bereiche jedes Kunststoffprofils mindestens teilweise das beim Schweißvorgang auf diese Seite verdrängte Material aufnehmen.

Beim Verschweißen von Kunststoffprofilen, besonders beim Verschweißen von auf Gehrung geschnittenen Enden für Fenster-oder Türrahmen, entsteht an der Außenseite ein Schweißwulst. Dieser Schweißwulst muß, um eine zumindest annähernd glatte Oberfläche zu erreichen, nachgearbeitet z.B. abgestochen werden. Das Nacharbeiten wird in einem zusätzlichen Arbeitsgang ausgeführt, und ist daher arbeitsaufwendig und teuer. Insbesondere bereitet es Schwierigkeiten an den Innenseiten der Ecken der Rahmen den Schweißwulst exakt zu entfernen. Da hier bei Fensterrahmen die Glasscheiben eingesetzt werden, stören Schweißwulstreste.

Es ist bekannt, z.B. aus der DE-OS 29 23 935, die Profilenden, die miteinander verschweißt werden sollen, beim Schneiden derart vorzubehandeln, daß die Profile in der Seitenansicht zwei Bereiche aufweisen, wobei ein Bereich im Vergleich zum anderen zurückgesetzt ist. Diese Bereiche verlaufen im wesentlichen parallel, und der zurückgesetzte Bereich befindet sich an der Außenseite des Profils. Die Seitenansicht des Profils weist also eine Abstufung auf. Zum Zusammenschweißen wird an beiden Profilenden der hervorragende Bereich des Profils mit einem Schweißspiegel erwärmt, und daraufhin die beiden Profilteile zusammengeführt. Es entsteht eine Verbindung zwischen den beiden Profilenden, wobei das Material aus den hervorstehenden Bereichen einerseits ins Innere des Profils verdrängt wird, und andererseits zwischen die beiden zurückgesetzten Bereiche der Profilenden gelangt. Dabei wird die Fuge zwischen den beiden zurückgesetzten Profilbereichen teilweise ausgefüllt. Eine feste Verbindung zwischen den beiden Profilenden entsteht jedoch nur auf der Hälfte des Querschnitts, nämlich in dem Teil, der die hervorragenden Bereiche aufweist. Die Fuge zwischen den beiden zurückgesetzten Teilen wird nur teilweise ausgefüllt, so daß von außen ein Spalt erkennbar ist.

Da durch den Schweißspiegel nur die hervorstehenden Bereiche angewärmt werden und nicht der zurückgesetzte Bereich, wird an diesem Teil der Profilenden keine haltbare Verschweißung erhalten. Der Wärmeübergang zwischen den Bereichen ist zu gering, um eine Verschweißung in beiden Bereichen zu gewährleisten.

Die Erfindung hat es sich zur Aufgabe gemacht, ein Verfahren zum Verschweißen von Kunststoffprofilen vorzusehen, bei dem eine größere Festigkeit zwischen beiden Profilen erreicht wird, wobei die Außenfläche annähernd gleichförmig eben erscheint.

Dazu geht die Erfindung aus von einem Verfahren der oben beschriebenen Art und schlägt vor, daß die zweiten Bereiche ein im wesentlichen kontinuierlich verlaufendes und an die ersten Bereiche anschließendes Querschnittsprofil erhalten, und beim Erwärmungsvorgang über die ersten Bereiche miterwärmt und beim Schweißvorgang mitverformt werden.

Durch den kontinuierlichen Übergang vom ersten zum zweiten Bereich, wird die Wärmeleitung zwischen den Bereichen entscheidend verbessert, so daß auch der zweite zurückgesetzte Bereich miterwärmt und in den Schweißvorgang einbezogen werden kann. Das Ergebnis ist eine höhere Festigkeit, da die Verbindung der beiden Profilenden sich nicht nur auf den erstern Bereich beschränkt, sondern auch einen großen Teil des zweiten Bereiches mitumfaßt.

Dadurch, daß der zweite Bereich im Vergleich zum ersten zurückgesetzt ist, kann das Material des ersten vorstehenden Bereiches beim Schweißen in den freien Raum zwischen den zweiten Bereichen fließen, und diesen ausfüllen. Die Aussparung, die der zurückgesetzte zweite Bereich im Querschnitt aufweist, ist im Vergleich zum bekannten Verfahren wesentlich kleiner, so daß an der Außenseite keine Fuge entsteht, sondern der Zwischenraum in der Regel völlig ausgefüllt ist. ·

Da der zweite Bereich beim Erwärmen miterwärmt wird, wird er durch das Zusammenfügen der beiden Profilenden beim Schweißvorgang etwas gestaucht, und es bildet sich eine geringfügige dachartige Erhöhung an der Außenseite.

Das Zusammenfügen der beiden profilierten Enden geschieht insbesondere derart, daß die beiden Ansätze der zweiten Bereiche am Profil nicht ganz zusammenstoßen, so daß zwischen ihnen genügend Platz bleibt, um das erweichte Material des ersten Bereiches aufzunehmen.

Bei einer bevorzugten Ausführungsform der Erfindung besitzt das Querschnittsprofil der zweiten Bereiche eine im wesentlichen ebene Endfläche. Eine solche ebene Endfläche ist leicht herzustellen. Der so geschaltete Bereich leitet die Wärme vergleichsweise gut und weist auch genügend Material auf, so daß beim Verschweißen keine Fuge zwischen den zweiten Bereichen entsteht.

Bei einer anderen Ausführungsform der Erfindung ist das Querschnittsprofil der zweiten Bereiche gewölbt. Diese Wölbung kann relativ zum Ende des Profils konkav oder konvex sein. Bei beiden Ausführungsformen hat es sich erwiesen, daß das erweichte Material in die Nut zwischen den beiden zweiten Bereichen fließt, und nicht an der Außenseite einen Schweißwulst ergibt.

Die Erfindung umfaßt ferner einen nach dem oben erwähnten Verfahren hergestellten Rahmen, bei dem die zusammengeschweißten Kunststoffprofile an den Außenflächen der Schweißstellen flache dachartige Erhöhungen aufweisen.

In der Zeichnung sind mehrere Ausführungsbeispiele dargestellt. Es zeigen:

Fig. 1 zwei Profilenden im Querschnitt, hergestellt nach dem bekannten Verfahren,

Fig. 2 zwei Profilenden im Querschnitt mit ebenen Endflächen, gemäß der Erfindung, vor dem Verschweißen,

Fig. 3 zwei Profilenden im Querschnitt nach dem Verschweißen,

Fig. 4 zwei Profilenden im Querschnitt mit konkaver Endfläche, und

Fig. 5 zwei Profilenden im Querschnitt mit konvexen Endflächen.

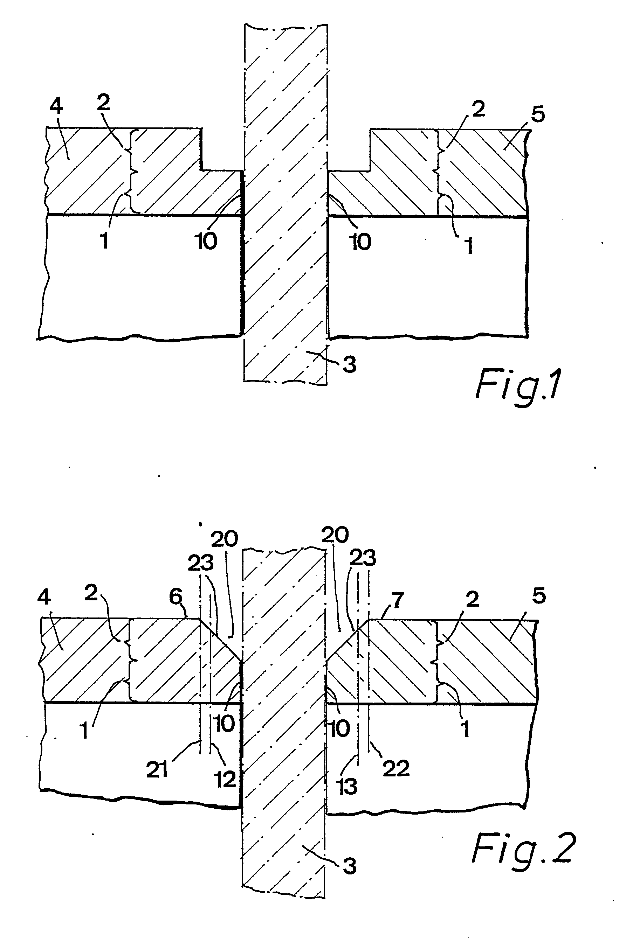

Wie in den Fig. 1 und 2 zu sehen, werden vor dem Verschweißen die Endflächen 10 des ersten Bereiches 1 mit Hilfe eines Schweißspiegels 3 erwärmt. Bei der bekannten Ausführungsform der Fig. 1 wird der Bereich 2 durch den Schweißspiegel 3 nur geringfügig mitaufgeheizt, da der Wärmeübergang hier sehr schlecht ist.

Ein deutlich besserer Wärmeübergang findet sich bei der Ausführungsform der Fig. 2, bei der der Bereich 2 abgeschrägt verläuft und eine ebene Endfläche 23 aufweist.

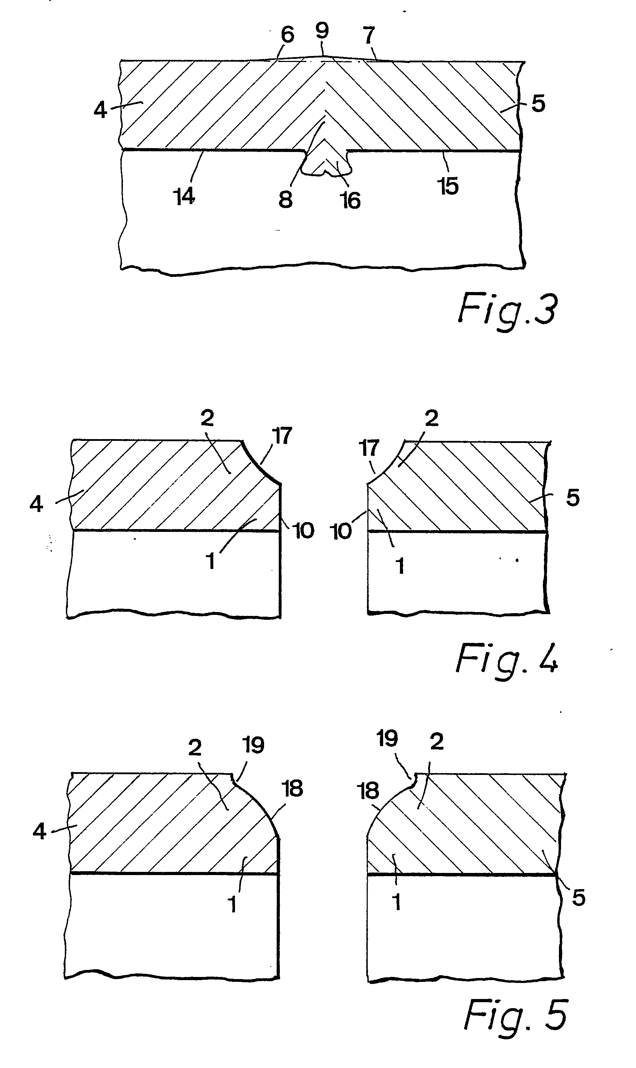

Die Abschrägung der Fig. 2 hat den weiteren Vorteil, daß beim Verschweißen, wobei zuerst der Schweißspiegel 3 entfernt wird und dann die beiden Kunststoffprofile 4, 5 so weit zusammengeschoben werden, daß sich die strichpunktierten Linien 12, 13 überdecken, das erweichte Material den Raum 20 zwischen den Kunststoffprofilen 4, 5 vollkommen ausfüllt. An der Schweißstelle 8 bildet sich (vgl. Fig. 3) an den Außenflächen 6,7 der Kunststoffprofile 4, 5 eine geringfügige dachartige Erhöhung 9.

Die Profilierung wird so angebracht, daß die dachartige Erhöhung 9 an der Außenseite der Kunststoffprofile 4, 5 auftritt.

An der Innenseite 14, 15 der Kunststoffprofile 4, 5 bildet sich ein Schweißwulst 16, wie an sich bekannt.

Die Fig. 4 und 5 zeigen Varianten der Erfindung, wobei in der Fig. 4 der zweite Bereich 2 mit einer konkaven Wölbung 17 endet. Auch hier wird beim Erwärmen des ersten Bereiches 1 mit dem Schweißspiegel der zweite Bereich 2 und die Wölbung 17 miterwärmt, so daß beim Zusammenfügen der beiden Profilenden das erwärmte Material des vorstehenden ersten Bereiches 1 in die Aussparung zwischen den beiden zweiten Bereichen 2 fließt. Die Wölbung 17 nimmt ungefähr die Hälfte des Querschnittprofils der Kunststoffprofile 4, 5 ein.

Die Fig. 5 zeigt ein Ausführungsbeispiel, bei dem der zweite Bereich 2 an seinem Ende die konvexe Wölbung 18 aufweist. Die Wölbung 18 erstreckt sich vorzugsweise über etwas mehr als die Hälfte des Querschnittprofils der Kunststoffprofile 4, 5, und weist an seiner Außenseite einen Übergang 19 mit gegengerichteter Krümmung auf. Dieser Übergang dient zur Aufnahme des erwärmten Materials nach dem Schweißvorgang, so daß auch hier nach dem Verschweißen der beiden Profilenden an der Außenseite sich nur eine leichte dachartige Erhöhung bildet, und weder eine Fuge, noch ein Schweißwulst zu sehen ist.

Wie ausgeführt, können die Kunststoffprofile 4, 5 so weit zusammengeschoben werden, daß sich die strichpunktierten Linien 12, 13 (vgl. Fig. 2) überdecken. Es ist aber auch möglich, bei geeigneter Erwärmung die Kunststoffprofile 4, 5 so weit zusammenzudrücken, daß sich die strichpunktierten Linien 21 und 22 überdecken.

Es ist klar, daß in diesem Falle mehr Material verdrängt werden muß, wobei es sich empfiehlt, dem durch eine geeignete Ausbildung des Bereiches 2 Rechnung zu tragen. Dabei kann nicht nur die Materialabnahme im Bereich 2 sinngemäß angepaßt werden. Auch die Breite des Bereiches 2 im Vergleich zum Bereich 1 kann entsprechend gewählt werden.

Die dachartige Erhöhung 9 führt im Ergebnis zu einer Verdickung des Profils. Das hierfür benötigte Material wird aus dem Bereich 2 verdrängt.

In der Regel wird die Erfindung derart angewandt, daß bei hohlen Profilen 4, 5 die beispielsweise rechteckartig sein können, der Bereich 1 der Innenhöhlung zugeordnet ist, während der Bereich 2 jeweils der Außenfläche der Profile benachbart ist. Auf diese Weise bildet sich der Schweißwulst 16 im Inneren des Hohlprofils, wo eine Nacharbeitung entbehrlich ist. In besonderen Fällen kann die Erfindung aber auch bei solchen Profilen oder Profilteilen angewandt werden, die stegartig gestaltet sind, so daß der gebildete Schweißwulst 16 an sich zugänglich bleibt. Insbesondere bei solchen Kunststoffprofilen empfiehlt es sich, die Anordnung derart zu treffen, daß ein Bereich 1 beidseitig von Bereich 2 eingeschlossen ist, so daß weder auf der einen noch auf der anderen Seite ein Schweißwulst entsteht.

Die Erfindung läßt sich insbesondere an den inneren Ecken von aus Kunststoffprofilen zusammengeschweißten Fensterrahmen anwenden, wo die Entfernung der Schweißwülste beispielsweise durch Fräsen häufig nicht möglich und auch die Anwendung von Stechmessern umständlich ist. Wenn in diesem Bereich die dachartige Erhöhung 9 bzw. eine entsprechende Verformung auftritt, ist es ohne weitere Bedeutung, da eine solche Erhöhung vergleichsweise niedrig ist, und beispielsweise das Einsetzen einer Fensterscheibe nicht behindert.

Es ist gefunden worden, daß bei der Erfindung eine gute, haltbare Schweißverbindung nicht nur im Bereich 1 gewonnen wird, sondern daß auch im Bereich 2 noch eine echte Verschweißung auftritt, auch wenn die Festigkeit in diesem Bereich nicht immer die Festigkeit im Bereich 1 erreicht.

**Ansprüche**

1. Verfahren zum Verschweißen von Kunststoffprofilen, insbesondere für Fenster- oder Türrahmen, wobei die Kunststoffprofile an ihren zu verschweißenden Enden vor dem Schweißvorgang profiliert werden, um mindestens teilweise je zwei parallele Bereiche zu bilden, von denen der erste Bereich gegenüber dem zweiten Bereich vorsteht, die an einem Schweißspiegel erwärmt und zum Verschweißen diese ersten Bereiche der beiden Kunststoffprofile gegeneinander geführt und gepreßt werden, wobei auf der einen Seite dieser ersten Bereiche vom verdrängten Material ein Schweißwulst gebildet wird, und die zweiten Bereiche jedes Kunststoffprofils mindestens teilweise das beim Schweißvorgang auf diese Seite verdrängte Material aufnehmen, dadurch gekennzeichnet, daß die zweiten Bereiche ein im wesentlichen kontinuierlich verlaufendes, und an die ersten Bereiche anschließendes Querschnittsprofil erhalten, und beim Erwärmungsvorgang über die ersten Bereiche mit erwärmt und beim Schweißvorgang mit verformt werden.

2. Verfahren nach Anspruch 1, dadurch gekennzeichnet, daß das Querschnittsprofil der zweiten Bereiche eine im wesentlichen ebene Endfläche besitzt.

3. Verfahren nach einem oder beiden der vorhergehenden Ansprüche, dadurch gekennzeichnet, daß das Querschnittsprofil der zweiten Bereiche gewölbt ist.

4. Nach dem Verfahren nach einem der vorhergehenden Ansprüche hergestellte Rahmen, dadurch gekennzeichnet, daß die zusammengeschweißten Kunststoffprofile (4,5) an den Außenflächen (6,7) der Schweißstellen (8) flache, dachartige Erhöhungen (9) aufweisen.

0 264 052

Fig.1

Fig.2

0 264 052

Fig.3

Fig.4

Fig. 5